# EUROPEAN PATENT APPLICATION

(11) **EP 4 579 096 A1**
(43) Date of publication of application: **02.07.2025**
(21) Application number: 24461645.4
(22) Date of filing: 13.12.2024
(51) Int. Cl.: F16C 3/02

(54) **MOUNTING ELEMENT AND TUBE OF AUTOMOTIVE DRIVESHAFT**

(30) Priority: 14.12.2023 EP 23461689
(71) Applicant: Krawczyk, Maciej, 32-087 Garlica Murowana (PL)
(72) Inventor: Krawczyk, Maciej, 32-087 Garlica Murowana (PL)
(74) Representative: Czarnik, Maciej

(57) **Abstract**

Mounting element (1) of an automotive drive shaft for use with the drive shaft tube (2), wherein the mounting element (1) comprises a body (11) and an insert (12), characterized in that the insert (12) is approximately cylindrical in shape and is equipped with at least two centering rings (13a, 13b), wherein the shape of the centering rings (13a, 13b) of the insert (12) corresponds to the shape of the seating sleeve (21) of the tube (2), and between the centering rings (13a, 13b), there is a section of the insert with a reduced profile (15), which, when the insert (12) is inserted into the tube (2), forms a chamber for placing adhesive. The invention also includes the tube (2) of the drive shaft, the drive shaft, and the method of bonding the actuating element (1) to the aforementioned tube (2).

## Description

The invention relates to the design of a mounting element and the tube of an automotive drive shaft, the drive shaft itself, as well as the method of bonding these components. Depending on the type of shaft, the mounting element may serve as a tubular joint, a sliding joint, a splined joint shaft, a T-connector for a flexible coupling or a splined shaft with bearing support for the shaft mount.

Drive shafts are rotating components used in various machines and vehicles, operating at different speeds. Their primary function is to transmit torque from the engine to the drivetrain, such as the gearbox, differential, and wheels, enabling the vehicle to move. The construction of drive shafts typically includes components such as universal joints, constant velocity joints, sliding joints, intermediate connections, and flexible couplings. In most cases, a drive shaft is built around a cylindrical tube with a circular cross-section. The shape of the shaft significantly affects its strength and the driving comfort. Rotating components lacking a streamlined form can generate undesirable noise, which may reduce the overall comfort of travel.

For many years, drive shafts were manufactured using steel tubes. The most common production methods involved cold working: one such method is drawing, which entails pulling a steel tube through a die to make it thinner and longer. Another common method is cold rolling. In contrast, the production of composite or carbon tubes utilizes carbon fibers, which may come in the form of thread, tape or yarn. The winding process involves wrapping a core with carbon fibers that are impregnated with resin, either around or onto the core in a specific pattern, using a selected fiber orientation. This can be done in a single layer, multiple layers, or in various directions, depending on the desired mechanical and structural properties of the tube. The manufacturing process for composite tubes, known as filament winding, differs significantly from traditional techniques used for steel tubes. Despite the precision involved, it is difficult to achieve sharp edges or defined shapes due to the flexibility and layered nature of composite materials.

In the case of steel components traditionally used in drive shafts, machining or other commonly available methods can be employed to achieve the desired shape. Steel elements have a homogeneous cross-section and do not consist of layers, unlike composite components. However, machining a carbon fiber tube can weaken it and compromise the integrity of the layer formed during the winding process. Any interference that disrupts the structure of a carbon fiber tube may degrade its mechanical strength. For this reason, the final shape of a composite tube must be defined during its manufacturing process, rather than through subsequent machining. Steel is widely used in mechanical constructions due to its strength, flexibility, and corrosion resistance. Steel shaping and processing methods include cutting, bending, turning, milling, and extrusion. These techniques allow steel to be formed into various shapes and sizes, meeting precise standards and design specifications. During steel processing, it is possible to achieve sharp shapes and accurate dimensions thanks to the metal's plastic properties and the precision of machining and forming techniques.

Various drive shaft designs are known from the prior art. For example, U.S. patent application US2002032065 AA describes a drive shaft construction that improves the connection between the main shaft body and the yoke. It employs interlocking toothed components and matching grooves to create a stronger and more secure connection. The manufacturing method includes a press-fit assembly step followed by a retraction stage, ensuring proper installation and alignment. This patent application uses a knurling technique on the outer surface of the insertable component to be pressed into a composite tube. Depending on the knurling design, the resulting tooth shape and height are intended to lock the insert in place during pressing and prevent it from rotating during shaft operation. In my solution, knurling and the cylindrical inner shape of the tube are not used, as they do not solve the issue of carbon fiber delamination between the tube's layers. Instead, the use of a specifically shaped internal profile within the tube enhances strength and physically prevents the insert from rotating.

On the other hand, Chinese utility model CN205315467 U discloses a drive shaft made from a carbon fiber composite, consisting of a tube with tubular connectors at both ends. One of the tubular connectors is joined to a sliding sleeve via a universal joint. The other end of the drive shaft features a flange connection, a universal joint, and a tubular connector inserted inside the tube. The shaft tube is made of a carbon fiber composite material, which combines carbon fibers with epoxy resin. This material is very strong and durable, resulting in a more efficient and reliable drive shaft. The utility model relies on the connection of a round tube to a round tubular connector using a press-fit and/or adhesive bonding. However, this round-to-round connection does not eliminate the issue of delamination between the layers of the carbon fiber tube. In the event of delamination, torque will no longer be transmitted between the driving and driven components. The use of a polygonal connection solves the problem of drive loss due to delamination at the ends of the tube, as it physically prevents rotational slippage between the layers of the composite tube.

U.S. patent application US20230143202 A1 describes a tubular connector used as a mounting element in vehicles for transmitting power from the engine to the wheels. The invention pertains to a component referred to as a tubular connector, which is employed in a drive shaft. This connector is joined to the drive shaft tube either by adhesive bonding or a tight fit. In this solution, the yoke of the tubular connector is made from a prepreg composite material, which is both strong and lightweight. The use of this material enhances the performance and durability of the drive shaft.

In drive shafts, a common method for connecting components involves male and female locks. These are used in intermediate joints, flange joints, and sliding joints. A sliding joint consists of a sleeve and a splined shaft. Depending on the design, some components feature a female lock, while others have a male lock. Male/female locks are most commonly used to attach the drive shaft to the transmission or differential, in order to transmit torque and ensure the drive shaft is properly centered.

Drive shafts consist of a tube and side components attached to it. Tubes, rather than solid rods, are used in drive shafts. This means that the shafts are not solid in cross-section like rods. Transmitting torque by using a coupling directly in a carbon fiber tube is virtually impossible. It would require a coupling fastened with screws threaded into a thick-walled composite tube. However, using a coupling is not feasible because drilling into the composite tube would compromise its structural integrity. Threads are not made directly in composite tubes. Instead, special steel inserts with internal threads are used; these are either press-fitted or bonded with adhesive. The purpose of using couplings to connect two components is to center them, not to transfer torque between the composite tube and the inserted or pressed-in insert. In steel shafts, the component with the coupling is connected to the steel tube by welding, brazing, or with a splined joint. Forming a precise spline in a composite tube during its winding process is impossible due to the nature of the fiber and the inability to form sharp or straight angles. Most methods known from steel tube manufacturing and processing cannot be applied to composite tubes.

The objective of the invention was to create a drive shaft with increased strength for use with high engine power and torque, while maintaining an aerodynamic shape to ensure high user comfort and eliminate noise. An additional goal was to produce a carbon fiber shaft with enhanced resistance to delamination between the fiber layers and the insert of the mounting component. Another aim was to achieve a shaft construction in which the torque is transmitted through the entire cross-section of the carbon tube, rather than gradually between layers as in round insert-to-tube connections. Moreover, the solution was intended to prevent drive loss in case of insert loosening, and to allow for either tight or loose fits during assembly, with the option of using adhesive bonding.

The core of the invention is a mounting element of an automotive drive shaft intended for use with a drive shaft tube. The mounting element includes a body and an insert, and is characterized in that the insert is approximately cylindrical in shape and is equipped with at least two centering rings. The shape of the centering rings corresponds to the shape of the tube's seating sleeve, and between the centering rings there is a recessed section of the insert which, when the insert is inserted into the tube, forms a chamber for adhesive application.

The use of two centering rings allows the formation of a chamber between the insert and the tube, enabling it to be filled with adhesive. The insert can be press-fitted or tight-fitted, with additional adhesive bonding for enhanced security. Combining these two different methods increases safety and prevents the insert from being ejected from the composite tube. It is important to note that drive shafts are subjected to various forces from the driving to the driven element. Misalignment between mounting components significantly affects shaft performance and lifespan. The adhesive is intended to permanently bond the surface of the tube to the surface of the insert, preventing any movement. Additionally, the use of two centering rings facilitates and improves the precision of aligning the insert with the composite tube.

Preferably, each of the centering rings of the insert has a cross-sectional shape in the form of a generally regular polygon with between 8 and 20 angles. More preferably, each of the centering rings of the insert has a cross-sectional shape in the form of a regular polygon with between 12 and 14 angles, and most preferably 12 angles.

The use of 12 angles is the most optimal solution due to the mechanical strength of the connection, the cylindrical external shape of the composite tube, the minimal number of milling operations assuming the insert cannot rotate within the tube, the minimization of the risk of tube cracking at the polygon edges, the optimization of the production process during the winding of the composite tube, and the elimination of the possibility of rotation between the layers of the composite tube.

The mounting element according to claim 1 is characterized in that the body of the mounting element comprises: a tubular joint or a sliding joint or a splined shaft of a joint or a yoke of a flexible coupling or a splined shaft with bearing support.

The use of the above elements together with a mounting insert in a carbon tube allows for the construction of various configurations of drive shafts depending on the requirements. The solution enables the construction of short, long, split shafts, shafts operating at increased angles, and shafts with an extended range of motion.

The invention also concerns a tube of an automotive drive shaft intended for use with a mounting element according to the invention, wherein the tube is equipped with a seating sleeve which is shaped to match the centering rings of the insert.

Preferably, the tube according to the invention contains at least one hole for injecting adhesive into the chamber formed by the reduced diameter section and the inner side wall of the tube, preferably two holes, preferably two holes placed symmetrically on opposite sides of the tube.

The use of two opposing holes is intended to allow adhesive to be injected through one hole and the excess to exit from the opposite side. Forcing the adhesive between the holes ensures complete filling of the chamber between the insert and the tube. Tests have been conducted in which the filling method of the chamber was examined depending on the number and location of the holes, the number of centering rings, and the viscosity of the adhesive. The most satisfactory results were obtained when using two holes.

Preferably, the drive shaft tube is made of aluminum or carbon fiber, preferably carbon. Particularly preferably, the length of the seating sleeve at the ends of the carbon fiber drive shaft tube with a regular polygonal cross-section is between 40 and 140 mm. The invention also relates to an automotive drive shaft comprising a mounting element according to the invention and a shaft tube according to the invention.

In another aspect of the invention, its essence also lies in the method of bonding an automotive drive shaft, comprising the following steps: the insert of the mounting element defined in any of claims 1 to 4 is placed in the seating sleeve of the drive shaft tube defined in any of claims 6 to 9; adhesive is introduced through the hole in the tube until the chamber formed between the centering rings, the recessed section of the insert, and the tube is filled.

A round shape transmits torque more efficiently than a polygonal shape. This is due to the geometric features and structural properties of both shapes. A round shape can be more effective in torque transmission than a polygonal shape: (1) Load distribution: In a round shape, loads and stresses are evenly distributed around the axis, which helps in uniform torque transmission. In the case of a twelve-sided shape, there are edges and corners that may create stress concentrations, which can lead to potential weak points and increased stress. (2) Lower mass on the circumference: A round shape has a lower mass on the circumference compared to a polygonal shape with the same cross-sectional area. This affects the moment of inertia, thereby increasing the efficiency of torque transmission. (3) Absence of edges and corners: The round shape does not have edges or corners that could be stress concentration points. This may contribute to reducing the risk of cracks or damage compared to a polygonal shape.

An advantage of the invention is its applicability to any type of drive shaft, including tubular joints, flange joints, splined joint shafts, intermediate shafts used for mounting drive shaft supports, and sliding joints that allow the drive shaft to extend and retract during suspension operation. Each of the aforementioned components can be made or adapted in such a way that it is equipped with a mounting element with an insert shaped to match the mounting sleeve of the carbon tube.

The use of a form-fitting connection according to the invention in composite drive shafts offers the following advantages: it increases the mechanical strength of the shaft, enhances the strength of the tube-to-insert connection, allows for self-centering of the insert-to-tube connection, enables press-fit and/or bonded assembly, eliminates the issue of carbon fiber delamination at the tube ends after connection with the insert, minimizes the risk of unwanted noise caused by non-aerodynamic shape of the rotating element, makes use of composite tube manufacturing technology with a regular polygonal cross-section only at the ends of the composite tube, and increases the service life of the drive shaft under dynamic load conditions.

The subject of the invention is presented in exemplary embodiments that do not limit its scope and in the drawings, in which:
- Fig. 1: illustrates a drive shaft according to the first embodiment, in which the mounting element is equipped with two centering rings with a dodecagonal cross-section,
- Fig. 2: shows an approximate construction of the drive shaft mounting element according to the invention in an axonometric view,
- Fig. 3: illustrates the construction of the drive shaft mounting element in the form of a splined joint shaft in a side view,
- Fig. 4: illustrates a drive shaft according to the second embodiment, in which the mounting element is equipped with a single centering ring with a regular dodecagonal cross-section,
- Fig. 5: presents a side view of the shaft along with two cross-sectional views,
- Fig. 6: illustrates the tested cross-sections of inserts of the mounting element with different numbers of angles,
- Fig. 7: illustrates the vertex angle α for the insert cross-section in the shape of a dodecagon,

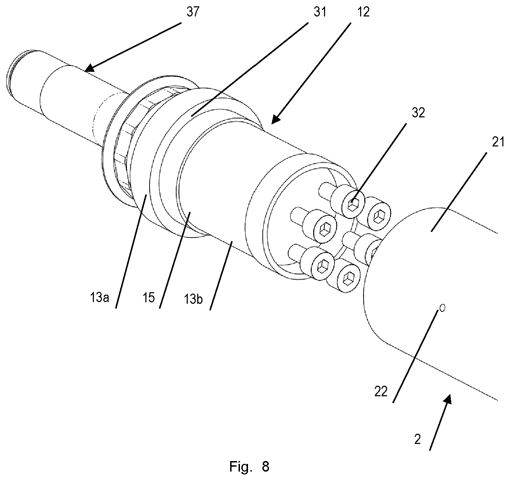

- Fig. 8: illustrates a drive shaft with a connector from the third embodiment, in which the connector is equipped with an insert with two centering rings having a circular cross-section and a shaft tube equipped with adhesive injection holes.

### Example 1. Carbon shaft with a mounting element and insert

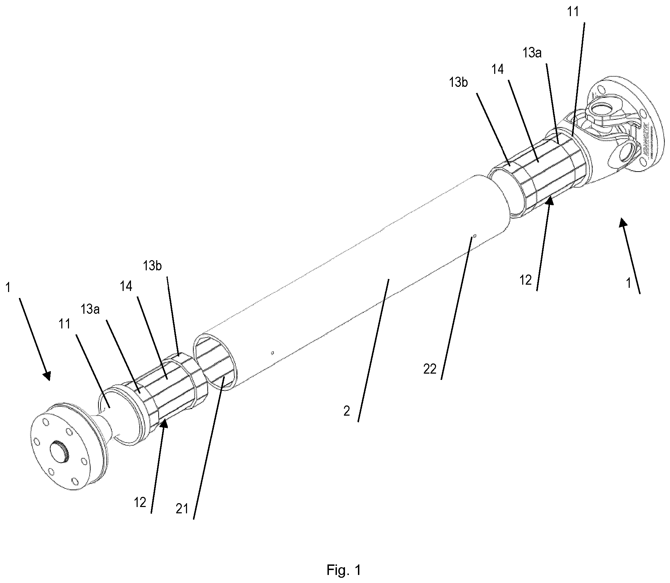

In the first embodiment, shown in Fig. 1, the carbon fiber-reinforced drive shaft is an automotive drive shaft and consists of a carbon fiber tube (2) with a radius of 35 mm and two mounting elements (1) positioned at the ends of the tube - on the left side, a splined joint shaft, and on the right side, a tubular connector. Each of the mounting elements (1) comprises a body (11) connected to an insert (12) that is approximately cylindrical in shape and 120 mm in length, although the insert length may vary and typically ranges from 40 to 140 mm.

The insert (12) is equipped with two centering rings (13a, 13b) with a regular dodecagonal cross-section. The cross-sectional shape of the centering rings (13a, 13b) of the insert (12) may be a polygon with between 8 and 20 sides. Example 3 presents the results of tests conducted with polygons of varying numbers of sides.

The first centering ring (13a) is located adjacent to the body (11) of the mounting element (1), while the second centering ring (13b) is positioned at the end of the cylindrical extension of the insert (12). Between the centering rings (13a, 13b) there is a reduced-diameter section (14), whose radius is smaller than that of the centering rings (13a, 13b) by 0.2 to 2 mm.

In the first embodiment, the mounting element (1) is fixed to the seating sleeve (21) of the carbon fiber tube (2) of the drive shaft using interference fit of the centering rings (13a, 13b) and adhesive bonding. After the insert (12) is placed into the seating sleeve (21) of the tube (2), matching its shape, a chamber for adhesive is formed. Adhesive is applied directly to the insert (12) before it is inserted into the mounting element (1).

In a preferred embodiment, the side wall of the carbon fiber tube (2) is equipped with two holes (22) placed symmetrically on opposite sides of the tube (2). In this case, after the insert (12) is placed into the seating sleeve (21), the adhesive is injected through one of the holes (22) into the adhesive chamber. Once the chamber is filled, the excess adhesive exits through the opposite hole (22).

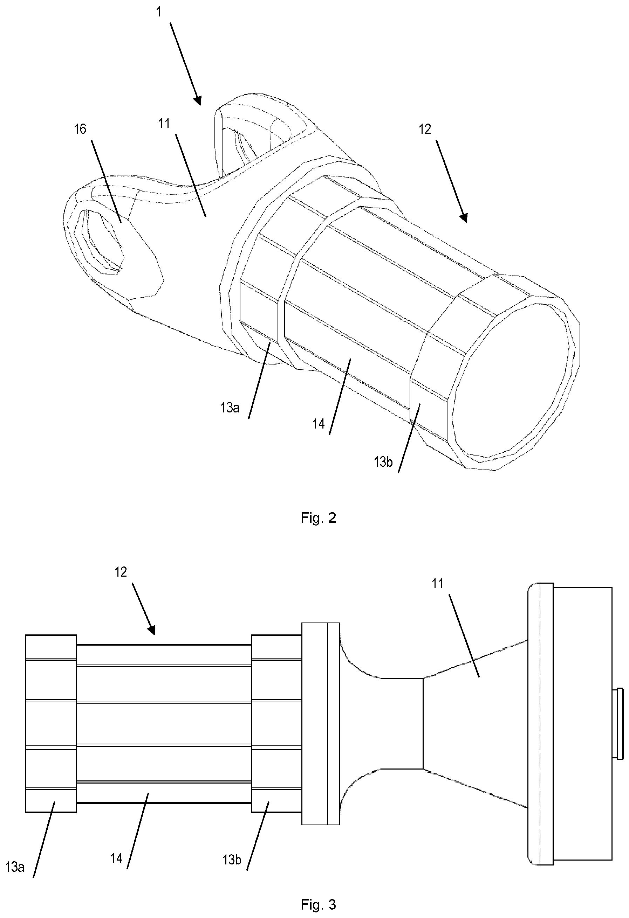

Figures 2 and 3 show two different types of mounting elements (1). One is a tubular connector, and the other is a splined joint shaft. The solution according to the invention can also be applied in other types of joints.

### Example 2. Strength comparison of the insert depending on its shape

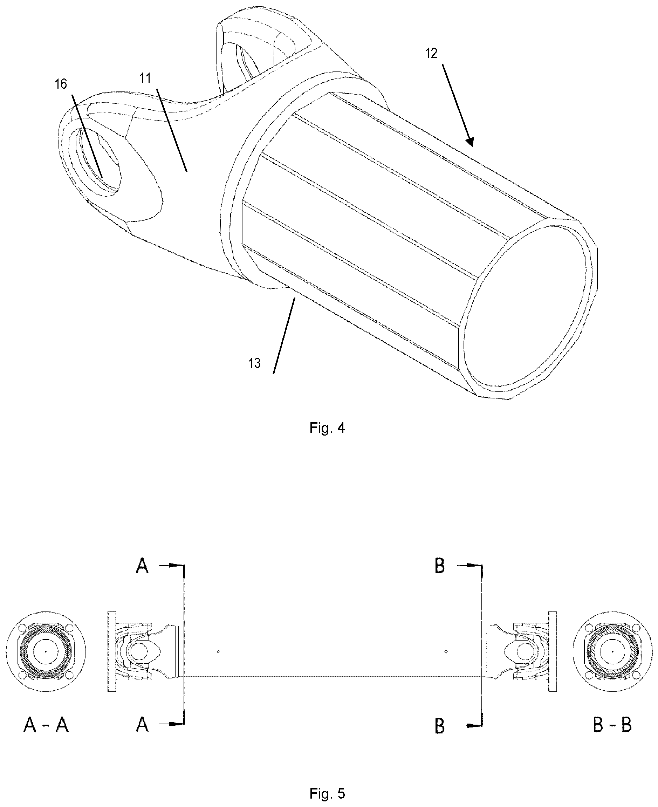

Tests were performed on inserts (12) of the mounting element (1) with external walls having cross-sections of various numbers of angles. As a result of the conducted tests, it was found that inserts (12) with fewer than 8 angles are unsuitable for application, and such solutions are characterized by high stress concentrations of the wound carbon fiber of the tube (2) at the sharp edges forming the polygon vertices. It is also not possible to achieve a round shape of the wound fiber. On the other hand, in the case of insert (12) cross-sections forming polygons with more than 20 angles, it was also found that they are unsuitable for practical application due to the increased risk of rotation of the insert (12) within the carbon fiber tube (2) under high torque loads. Cross-sections of the insert ranging from 8 to 20 angles (illustrated in Fig. 5) were divided into three groups: the first from 8 to 11, the second from 12 to 14, and the third from 15 to 20 angles. Table 1 presents the results of the conducted tests assessing various operational parameters of the applied solutions, i.e. mechanical strength, cylindricity of shape, manufacturing difficulty, risk of rotation inside the tube, risk of tube cracking at the polygonal section, imperfections in the carbon fiber structure during shape winding, flexibility in adjusting the tube wall thickness while maintaining a cylindrical shape, the amount of fiber needed to obtain a cylindrical shape, production cost, production time, wall thickness from the polygon vertex to the outer diameter of the tube, and the possibility of rotation between layers.

**Table 1. Influence of insert cross-section on operational conditions**

| Parameters | Parameters | | |
|---|---|---|---|
| | 8-11 | 12-14 | 15-20 |
| Mechanical strength | 3 | 4 | 3 |
| Cylindricity of shape | 2 | 3 | 4 |
| Production difficulty | 2 | 2 | 4 |
| Risk of rotation inside the tube | 1 | 2 | 4 |
| Risk of tube cracking at the polygonal section | 4 | 3 | 2 |
| Imperfections in carbon fiber structure during shape winding | 4 | 2 | 1 |
| Flexibility in adjusting tube thickness while maintaining cylindrical shape | 1 | 3 | 4 |
| Amount of fiber needed to achieve cylindrical shape | 4 | 2 | 2 |
| Production cost | 4 | 2 | 4 |
| Production time | 4 | 2 | 3 |
| Wall thickness from polygon vertex to outer tube diameter | 4 | 2 | 1 |
| Susceptibility to inter-layer rotation | 1 | 2 | 4 |
| Legend description: 1 - low/small; 2 - medium; 3 - good/high; 4 - very good/very high | | | |

Analyzing the data presented in Table 1, it can be observed that the best operational parameters were obtained with the cross-section of insert (12) in the form of a polygon with 12 to 14 angles. Worse results were obtained for cross-sections with both a lower number of angles (8 to 11) and a higher number of angles (15 to 20). From a practical perspective, for inserts (12) with a cross-sectional shape being a polygon with 12 to 14 angles, the most important mechanical strength was achieved, along with very good cylindricity of shape, a satisfactory level of risk of tube cracking at the polygon, high flexibility in adjusting tube thickness while maintaining a cylindrical shape, as well as relatively low production cost and short production time. Another important and desirable parameter was the low susceptibility of insert (12) to inter-layer rotation.

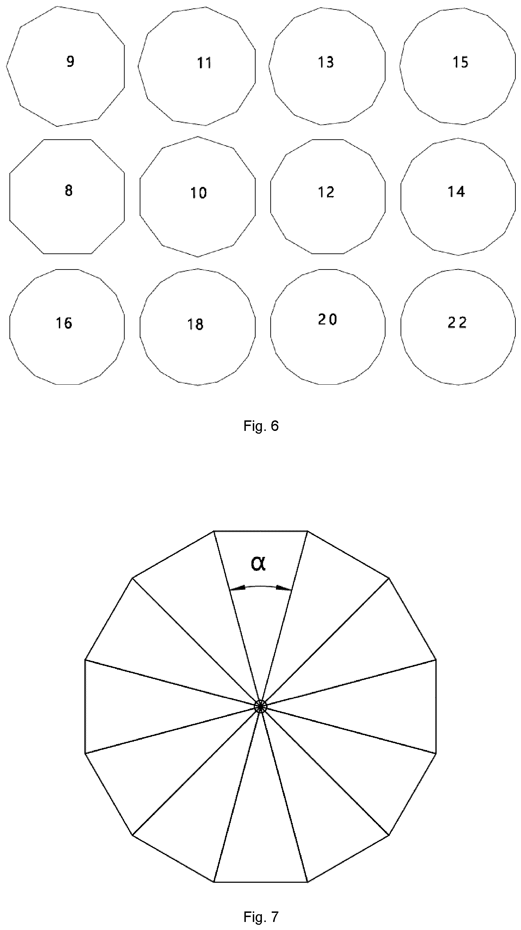

Tests were also conducted to determine whether the number of angles has an impact on tubes (2) with different radii (from 30 mm to 40 mm). It was found that the results are independent of the radius, since the angle α between the vertex radii of the polygon (as shown in Fig. 7) forming the cross-section of the insert (12) is the same for different radii of carbon fiber tubes (2) (see Table 2). Therefore, the results obtained for smaller radii were the same as those for larger radii.

**Table 2. Measures of angles between vertex radii of the polygon forming the cross-section of the insert depending on the number of angles**

| Tube radius | Number of angles | | | | | | | | | | |
|---|---|---|---|---|---|---|---|---|---|---|---|
| | 8 | 9 | 10 | 11 | 12 | 13 | 14 | 15 | 16 | 18 | 20 |
| 30 mm | 45° | 40° | 36° | ~32,7° | 30° | ~27,7° | ~25,7° | 24° | 22,5° | 20° | 18° |
| 35 mm | 45° | 40° | 36° | ~32,7° | 30° | ~27,7° | ~25,7° | 24° | 22,5° | 20° | 18° |
| 40 mm | 45° | 40° | 36° | ~32,7° | 30° | ~27,7° | ~25,7° | 24° | 22,5° | 20° | 18° |

### Example 3. Aluminum shaft with a mounting element and insert

In the third embodiment, illustrated in Fig. 9, the actuating element (1) of the automotive drive shaft is shown in the form of a connector (31) equipped with an insert (12) featuring two centering rings (13a, 13b) of cylindrical shape and an intermediate recessed section (15) located between them. In this embodiment, the connector (1) is equipped with holes (not visible in the figure) for fastening screws (32). The actuating element (1) includes a recess in the form of a partition, which is equipped with holes (not shown) for screws (32).

The side wall of the aluminum tube (2) is provided with one or more holes (22), preferably two holes (22) positioned symmetrically on opposite sides of the tube (2). In this preferred embodiment, after the insert (12) is placed in the seating sleeve (21), adhesive is introduced through one of the holes (22) into the adhesive chamber. Once the chamber is filled with adhesive, the excess flows out through the opposite hole (22).

### Example 4. Comparative tests of bonded carbon and aluminum shafts

Comparative strength tests were conducted on three drive shafts from embodiments 1 and 3 to evaluate their resistance to static and dynamic torque loads. Each shaft was subjected to a maximum load leading to failure. The tests were carried out at Gdańsk University of Technology in the LINTE² specialized laboratory using a test bench equipped with an angle gearbox, to which one end of the shafts was mounted, and a support structure securing the opposite end.

The purpose of the tests was to verify the strength and compare three different drive shaft designs. The main objective was to evaluate the maximum static and dynamic strength of carbon fiber shafts, and to compare the results with those obtained for aluminum shafts and a reference steel shaft. During the tests, the following components were evaluated: the bonded joint, the shaft connector, the tube, the universal joint, and the screws. Any of these elements could fail during the destructive testing. The results of the conducted tests are presented in Table 3 below.

**Table 3. Results of comparative strength tests**

| Designation | Reference 1 | Reference 2 | Reference 3 | Example 1 | Example 3 |
|---|---|---|---|---|---|
| Material and type of connection | Steel | Carbon | Aluminum | Carbon | Aluminum |
| | Welded | Bonded | Welded | Bonded | Bonded |
| Insert shape | Round | Round | Round | Formed 12-sided shape | Round |
| Adhesive chamber | None | None | None | Present | Present |
| Weight | 12 kg | 6 kg | 7,5 kg | 6 kg | 7,5 kg |
| Max torque / time to failure | 7201 Nm / ≈ 3 min | 3168 Nm / ≈ 20 min | 4992 Nm / ≈ 3.5 min | 3821 Nm / ≈ 2 min | 5806 Nm / ≈ 13 min |
| Failed shaft component | No damage, steel screws sheared | Bonded joint | Weld | Carbon tube | Bonded joint |

The obtained test results indicate that the methods used to connect the shaft to the mounting element (bonding, welding), the design of the insert (round, profiled), and the material of the mounting elements (aluminum, steel) have a significant impact on shaft strength. The initial tests showed a significantly lower strength of carbon shafts without an adhesive chamber and with round inserts (3168 Nm) compared to steel shafts (7201 Nm). Based on the gathered experience, a shaft connector was developed that allows for the installation of tubes made from different materials, such as carbon or aluminum. In further testing, aimed at evaluating the strength of the connection used in a composite shaft with a profiled insert as in Example 5, which addressed the delamination issue of the first composite tube layer, good strength results were achieved, with a maximum torque reaching 3821 Nm.

Subsequent tests were also conducted on aluminum shafts. During the testing, it was unexpectedly discovered that the aluminum shaft bonded to an automotive connector using adhesive introduced into the chamber through side holes achieved very good strength results, showing greater torsional strength than a welded aluminum shaft. Fracture of the welded aluminum shaft occurred at the weld seam during torsional testing at a torque of 4992 Nm, whereas the bonded shaft failed at the bonded joint after 13 minutes of twisting, at a torque of 5806 Nm. It should be noted, however, that at 5200 Nm, the aluminum tube began to twist. Upon analyzing the results, it was concluded that the weld weakens the aluminum tube section, and the value of 4992 Nm was very close to the critical point at which the aluminum tube began twisting and was near failure. Unexpectedly, it was found that the absence of a weld does not reduce the strength of the aluminum tube, allowing 100% of its material properties to be utilized, which contributed to the achievement of very high torque values.

The conducted static and dynamic tests confirmed the high strength of carbon shafts using a profiled insert. They also demonstrated that carbon shafts, with a specific fiber arrangement and tube structure, are capable of transmitting high torque values. In the event of a fracture in the carbon shaft tube, the failure is irreversible and leads to complete loss of drive. In the case of the aluminum shaft, after reaching a torque of 5806 Nm, the bonded joint with a round insert became heavily heated due to internal friction. After the drive shaft cooled down, the compromised adhesive structure was still able to transmit increasing torque up to 4704 Nm over a period of 3.5 minutes. The results confirmed the high effectiveness of the bonding method and the strength of the automotive connector under various insert configurations, when used with materials such as carbon or aluminum. The issue of torque transmission using connectors and bonding techniques has been resolved. The tests also confirm that the strength of the automotive connector and the bonding method significantly exceeds the strength of the composite tube, which was unexpectedly validated by testing an aluminum shaft specimen produced using the joining method originally developed for carbon shafts.

## Claims

1. A mounting element (1) of an automotive drive shaft for use with a drive shaft tube (2), wherein the mounting element (1) comprises a body (11) and an insert (12), **characterized in that** the insert (12) has a shape approximately cylindrical and is equipped with at least two centering rings (13a, 13b), wherein the shape of centering rings (13a, 13b) of the insert (12) corresponds to the shape of a seating sleeve (21) of the tube (2), and between the centering rings (13a, 13b) there is a section of the insert with a reduced profile (15), which, when the insert (12) is inserted into the tube (2), forms a chamber for placing adhesive.

2. The mounting element (1) according to claim 1, **characterized in that** each of the centering rings (13a, 13b) of the insert (12) has a cross-sectional shape in the form of a regular polygon with 8 to 20 angles.

3. The mounting element (1) according to claim 2, **characterized in that** each of the centering rings (13a, 13b) of the insert (12) has a cross-sectional shape in the form of a regular polygon with 12 to 14 angles, and preferably 12 angles.

4. The mounting element (1) according to claim 1, **characterized in that** the body (11) of the mounting element (1) comprises: a tubular joint, a sliding joint, a splined shaft joint, a yoke of a flexible connector, or a splined shaft with bearing support for the drive shaft support.

5. A tube (2) of an automotive drive shaft for use with the mounting element (1) defined in any of claims 1 to 4, wherein the tube (2) is equipped with a seating sleeve (21) that is shaped to match the centering rings (13a, 13b) of the insert (12).

6. The tube (2) according to claim 5, **characterized in that** it contains at least one hole (22) for injecting adhesive into the chamber formed by the reduced-diameter section (14) and the inner side wall of the tube (2), preferably two holes (22), with the two holes (22) being symmetrically placed on opposite sides of the tube (2).

7. The tube (2) according to claim 5 or 6, **characterized in that** it is made of aluminum.

8. The tube (2) according to claim 5 or 6, **characterized in that** it is made of carbon fiber, preferably carbon.

9. The tube (2) according to claim 9, **characterized in that** the length of the seating sleeve (21) at the ends of the carbon fiber tube (2) of the drive shaft with a regular polygonal cross-section is between 40 and 140 mm.

10. An automotive drive shaft comprising the mounting element (1) according to any of claims 1 to 4 and the tube defined in any of claims 5 to 10.

11. A method of bonding an automotive drive shaft (1) comprising the following steps:
a) Placing the insert (12) of the mounting element (1) defined in any of claims 1 to 4 into the seating sleeve (21) of the tube (2) of the drive shaft defined in any of claims 5 to 10;
b) Introducing adhesive through the hole (22) in the tube (2) until the chamber formed between the centering rings (13a, 13b), the reduced profile section (15) of the insert, and the tube (2) is filled.
